# EUROPEAN PATENT APPLICATION

(11) **EP 3 797 967 A1**
(43) Date of publication of application: **31.03.2021**
(21) Application number: 19826684.3
(22) Date of filing: 31.05.2019
(51) Int. Cl.: B29C 48/40

(54) **SCREW-TYPE EXTRUDER**

(30) Priority: 25.06.2018 JP 2018119855
(71) Applicant: KABUSHIKI KAISHA KOBE SEIKO SHO (KOBE STEEL, LTD.), Hyogo 651-8585 (JP)
(72) Inventor: HIGASHI, Kosuke, Kobe-shi, Hyogo 651-2271 (JP); FUKUTANI, Kazuhisa, Kobe-shi, Hyogo 651-2271 (JP)
(74) Representative: TBK
(86) International application number: PCT/JP2019/021875
(87) International publication number: WO 2020/003898

(57) **Abstract**

A screw-type extruder is equipped with: a pair of screws; a casing, which houses the pair of screws and in which a material charging port is provided on the upstream side; and a roller die. The screws have a shaft part and a helical flight part provided on the outer circumferential surface of the shaft part. In the area from the end on the downstream side of the charging port to the end on the downstream side of the flight part, the clearance between the top of the flight part and the inner wall surface of the casing at the end on the downstream side of the charging port is larger than the clearance in other portions.

## Description

### TECHNICAL FIELD

The present disclosure relates to a screw extruder for extruding a kneaded material.

### BACKGROUND ART

A process for manufacturing automobile tires uses an extrusion forming machine that is placed below a kneader to knead rubber as the raw material of the tires. The extrusion forming machine forms the rubber (kneaded material) fed from the kneader into a sheet shape while continuously extruding it.

Patent Literature 1 discloses a kneaded material transporter in which a gap is formed between a tapered screw and a casing disposed to surround a tip of the tapered screw. A part of a raw material fed and transported through the casing toward the tip thereof by rotation of the tapered screw is released into the gap so that pressure applied on the raw material can be relieved to inhibit the pressure from increasing and heat from being generated from the raw material due to the pressure applied to the raw material. In addition, the fed raw material can flow (move) easily in a portion where the raw material is bitten by the screw. Thus, the load on the screw is reduced and the amount of the extruded raw material is increased so that the raw material can be fed to a compression portion smoothly.

In addition, Patent Literature 2 discloses a twin-screw extruder in which at least two screw blades are disposed in a position corresponding to a compression portion so that a lead angle of each screw blade in the position corresponding to the compression portion is set to be smaller than a lead angle of the screw blade in a position corresponding to a hopper portion. In the position corresponding to the hopper portion, the function of biting a massive material fed from a material supply port and feeding the material to the compression portion is exhibited. In the position corresponding to the compression portion, the function of compressing the material to generate pressure required for extruding the material from a material discharge port, and inhibiting the material from flowing reversely, thereby securing a throughput is exhibited.

### CITATION LIST

### PATENT LITERATURE

Patent Literature 1: JP-A-2000-317291
Patent Literature 2: Japanese Patent No. 6202624

### SUMMARY OF INVENTION

### TECHNICAL PROBLEM

Recent diversification of materials causes a problem that some materials cannot be formed into sheets. One of the reason is considered to be a decrease of the quantity occupied by rubber in materials. The decrease in rubber quantity leads to a state in which there is no binding agent among pieces of the material. Thus, the material cannot be formed into a sheet easily. In order to form the material into a sheet under such a situation, it is necessary to enhance the function of the rubber serving as a binding agent. Specifically, it is necessary to improve the rubber density to increase the contact area among pieces of the rubber. In order to increase the contact area among pieces of the rubber, it is necessary to compress the rubber to enhance the density thereof. In order to form a sheet out of a material which is difficult to be formed into a sheet, it is therefore important to increase pressure in a bank portion where the kneaded material extruded by a screw accumulates.

According to Patent Literature 1, the extrusion amount increases to improve the kneading performance, but the capacity of increasing the pressure in the bank portion is reduced. According to Patent Literature 2, the material can be inhibited from flowing reversely, thereby enhancing the capacity of increasing the pressure in the bank portion, but the conveyance capacity is reduced so that there is a possibility that the effect of increasing the pressure cannot be obtained in some production capacity of the screw extruder.

An object of the present disclosure is to provide a screw extruder capable of improving capacity of increasing pressure in a bank portion.

### SOLUTION TO PROBLEM

The present disclosure is a screw extruder for extruding a kneaded material, the screw extruder including: a pair of screws; a casing that houses the pair of screws and includes a supply port for supplying a material, the supply port being provided on an upstream side of the casing; and a roller-die configured to extrude and form the material into a sheet shape, the roller-die being provided on a downstream side of the casing, in which: each of the screws includes a shaft portion, and a spiral flight portion provided in an outer peripheral surface of the shaft portion; the flight portion is formed into a shape in which a radial distance between the surface of the shaft portion and a tip of the flight portion decreases gradually toward a downstream end in an extrusion direction of a kneaded material; the casing has a tapered shape; and within a range between a downstream end of the supply port and a downstream end of the flight portion, a clearance between a top portion of the flight portion and an inner wall surface of the casing at the downstream end of the supply port is larger than a clearance at any other part.

### ADVANTAGEOUS EFFECTS OF INVENTION

In the present disclosure, within the range between the downstream end of the supply port and the downstream end of the flight portion, the clearance at the downstream end of the supply port is larger than the clearance at any other part. Accordingly, at the downstream end of the supply port, the rotational speed at the tip of the flight portion is reduced to reduce the strain rate in comparison with that in a configuration in which the clearance is constant between the downstream end of the supply port and the downstream end of the flight portion. As a result, at the downstream end of the supply port, the viscosity of the material is kept higher than that in the configuration in which the clearance is constant. Accordingly, leakage of the material toward the supply port is inhibited to improve the conveyance efficiency. Thus, it is possible to improve the capacity of increasing the pressure in the bank portion.

### BRIEF DESCRIPTION OF DRAWINGS

[FIG. 1] FIG. 1 is a sectional view of a screw extruder.
[FIG. 2] FIG. 2 is a sectional view of a downstream portion of a casing in a background-art screw shape.
[FIG. 3] FIG. 3 is a graph showing a relationship between a viscosity coefficient of rubber and a strain rate.
[FIG. 4] FIG. 4 is a schematic view of the downstream portion of the casing.
[FIG. 5] FIG. 5 is an explanatory view showing a relationship between a clearance in an axial direction of each screw and a viscosity coefficient in the background-art screw shape.
[FIG. 6] FIG. 6 is a sectional view of a downstream portion of a casing according to a first embodiment.
[FIG. 7] FIG. 7 is an explanatory view showing a relationship between a clearance in an axial direction of each screw and a viscosity coefficient in a screw shape according to the first embodiment.
[FIG. 8] FIG. 8 is a sectional view of a downstream portion of a casing according to a second embodiment.
[FIG. 9] FIG. 9 is an explanatory view showing a relationship between a clearance in an axial direction of each screw and a viscosity coefficient in a screw shape according to the second embodiment.
[FIG. 10] FIG. 10 is a graph showing a result of capacity of increasing pressure simply calculated based on shape factors of each screw.
[FIG. 11] FIG. 11 is a sectional view of a downstream portion of a casing according to a modification example of the second embodiment.
[FIG. 12] FIG. 12 is a sectional view of a downstream portion of a casing according to a third embodiment.
[FIG. 13] FIG. 13 is an explanatory view showing analysis results about capacity of increasing pressure.
[FIG. 14] FIG. 14 is a sectional view of a downstream portion of a casing according to a modification example of the third embodiment.

### DESCRIPTION OF EMBODIMENTS

Preferred embodiments of the present disclosure will be described below with reference to the drawings.

### [First Embodiment]

### (Configuration of Screw Extruder)

A screw extruder according to a first embodiment of the present disclosure is to extrude a kneaded material. In the present embodiment, the screw extruder is a screw extruder with roller-die for extruding a kneaded material of a polymer such as rubber and forming the extruded material into a sheet shape.

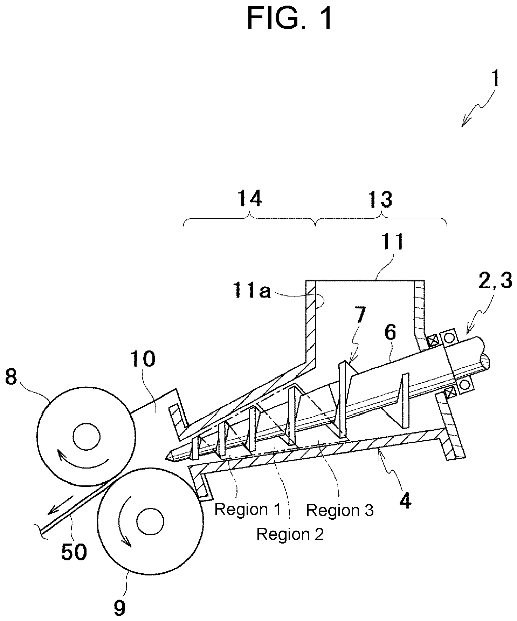

A screw extruder 1 includes a pair of screws 2 and 3, and a casing 4 as illustrated in FIG. 1, which is a sectional view. The pair of screws 2 and 3 are configured to extrude a kneaded material in the left direction of FIG. 1. The pair of screws 2 and 3 are arranged side by side in a direction perpendicular to the paper surface of FIG. 1. In the present embodiment, the number of threads in each of the screws 2 and 3 is 1.

Each of the screws 2 and 3 includes a shaft portion 6 and a flight portion 7. The shaft portion 6 is formed into a shape whose diameter decreases gradually toward its downstream end in the extrusion direction of the kneaded material. The flight portion 7 is provided on the outer peripheral surface of the shaft portion 6. The flight portion 7 has a spiral shape. In the flight portion 7 of each screw 2, 3, the distance in the radial direction between the surface of the shaft portion 6 thereof and the tip of the flight portion 7 is shorter as the flight portion 7 is closer to the downstream end in the extrusion direction of the kneaded material. That is, the flight portion 7 has a shape in which the distance in the radial direction between the surface of the shaft portion 6 and the tip of the flight portion 7 decreases gradually toward the downstream end in the extrusion direction. The screws 2 and 3 are designed to have the same shape and the same dimensions except that the torsion angles of the flight portions 7 are opposite to each other. In addition, the screws 2 and 3 are coupled to rotate in opposite directions to each other. The screws 2 and 3 are rotated at the same rotational speed by a not-illustrated single driving unit.

The casing 4 has a tapered shape and houses the pair of screws 2 and 3. In front of the casing 4 in the extrusion direction of the kneaded material, a pair of upper and lower rollers 8 and 9 are disposed. A part between the casing 4 and the rollers 8 and 9 is called a bank portion 10. The kneaded material extruded by the screws 2 and 3 accumulates in the bank portion 10.

The rollers 8 and 9 are coupled so as to rotate in directions opposite to each other. The rollers 8 and 9 are rotated at the same rotational speed by a not-illustrated single driving unit. The rollers 8 and 9 are called a roller-die, which is configured to roll the kneaded material and form it into a sheet shape (sheet 50).

A material (kneaded material) supply port 11 is provided on the upstream side of the casing 4 in the extrusion direction of the kneaded material. The casing 4 includes a casing upstream portion 13 in which the supply port 11 is provided at the top thereof, and a casing downstream portion 14 which is circumferentially surrounded by a wall surface. The kneaded material such as rubber supplied to the supply port 11 from above is extruded to the bank portion 10 by the screws 2 and 3 rotating in opposite directions to each other, and then passed between the rollers 8 and 9. Thus, the kneaded material is formed into a sheet shape.

Here, each of the screws 2 and 3 in the casing downstream portion 14 is divided into three regions 1 to 3 pitch by pitch for consideration. The screw 2, 3 has a tapered shape. Therefore, the conveyance capacity decreases in a more downstream region. Thus, the conveyance capacity in the region 1 is lower than that in the region 2. On the other hand, a part of the region 3 protrudes from the casing downstream portion 14 so that a sufficient amount of the kneaded material cannot be supplied to the region 3 only by the flight portion 7. Thus, the region 3 is not filled. As a result, the maximum conveyance capacity cannot be exerted. In addition, in some operating condition, the amount of the kneaded material supplied to the region 2 may be insufficient. Thus, the region 2 may not be filled, either.

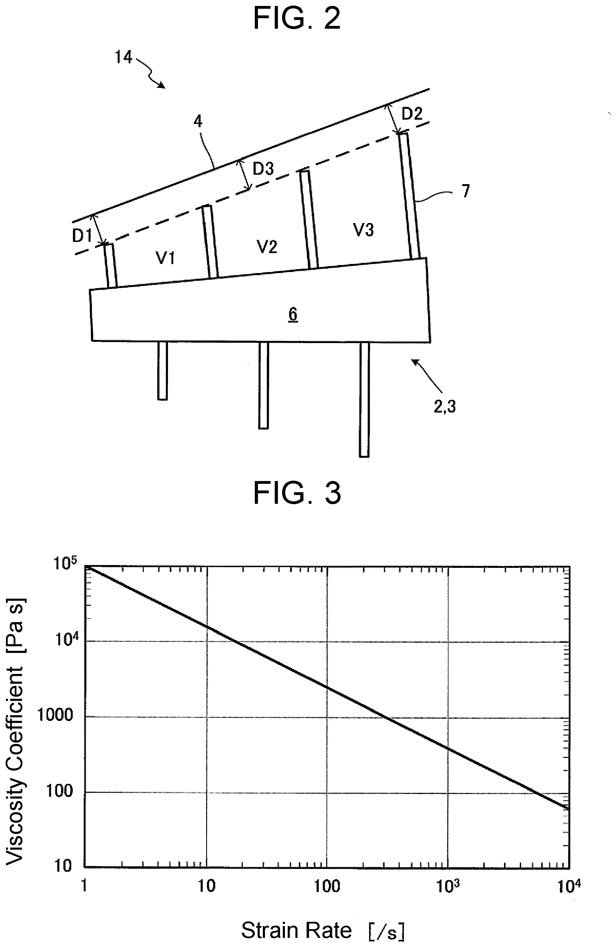

FIG. 2 shows a sectional view of the casing downstream portion 14 in a background-art screw shape. The gap between the top portion of the flight portion 7 and the inner wall surface of the casing 4 is called a clearance. The clearance is constant within the range between a downstream end 11a of the supply port 11 and a downstream end of the flight portion 7 shown in FIG. 1. That is, a clearance D2 at the downstream end 11a of the supply port 11, a clearance D1 at the downstream end of the flight portion 7, and a clearance D3 in an intermediate portion between the downstream end 11a of the supply port 11 and the downstream end of the flight portion 7 are the same. In this manner, due to the clearance fixed between the downstream end 11a of the supply port 11 and the downstream end of the flight portion 7, the relationship of V1<V2<V3 is established among volumes V1 to V3 in the respective pitches, and the conveyance capacity decreases on the more downstream side of the screw 2, 3.

Here, FIG. 3 shows a relationship between a viscosity coefficient of rubber and a strain rate. The strain rate (shear rate) is obtained by dividing the rotational speed at the tip of the flight portion 7 by the clearance. As shown in FIG. 3, rubber has a characteristic that the viscosity coefficient (viscosity) thereof decreases as the strain rate is larger. That is, under the same strain rate, the viscosity coefficient of rubber increases as the clearance increases.

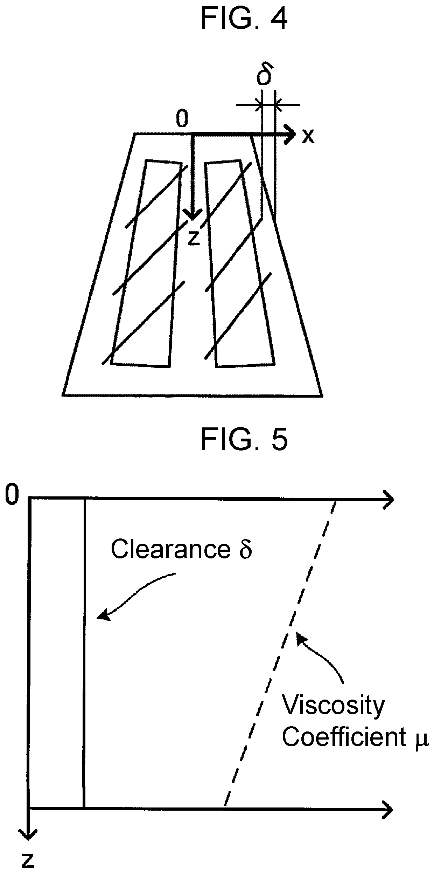

Here, as shown in FIG. 4, which is a schematic view of the casing downstream portion 14, the Z-coordinate is taken in the axial direction of each screw and the X-coordinate is taken in the radial direction of the casing 4, with the center at the downstream end of the casing 4 as the origin O. Using those coordinates, FIG. 5 shows a relationship between the clearance in the axial direction of each screw and the viscosity coefficient in the background-art screw shape. The clearance δ is constant between the downstream end of the casing 4 (the origin O) and the downstream end 11a of the supply port 11. On the other hand, the outer diameter of each screw 2, 3 (the height of the flight portion 7) increases from the downstream end of the casing 4 (the origin O) toward the downstream end 11a of the supply port 11. Thus, the strain rate increases. Therefore, the viscosity coefficient µ of the material decreases from the downstream end of the casing 4 (the origin O) toward the downstream end 11a of the supply port 11. As a result, due to the viscosity coefficient µ of the material decreasing toward the downstream end 11a of the supply port 11, the sealing pressure capacity for retaining pressure decreases.

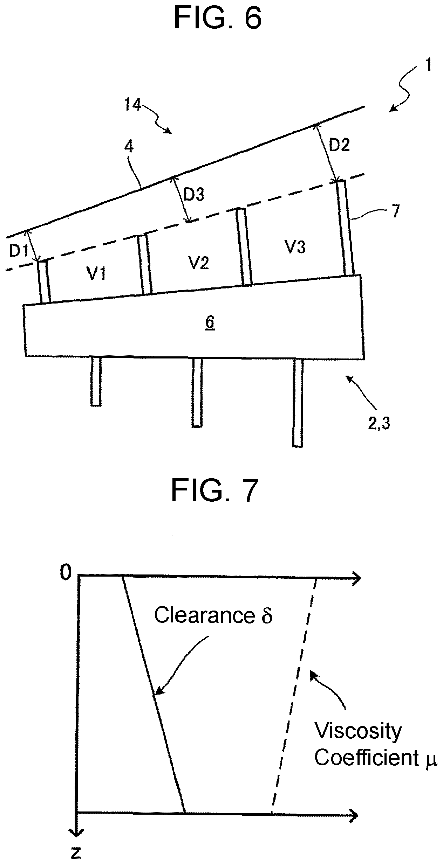

Therefore, in the present embodiment, as shown in FIG. 6, which is a sectional view of the casing downstream portion, the clearance D2 at the downstream end 11a of the supply port 11 is larger than the clearance at any other part within the range between the downstream end 11a of the supply port 11 and the downstream end of the flight portion 7.

In the screw extruder 1 according to the present embodiment, in the sectional view in the radial direction of the shaft portion 6, an imaginary line (broken line) connecting top points of the flight portion 7 is a straight line and the inner wall surface (solid line) of the casing 4 is also a straight line all over the range between the downstream end 11a of the supply port 11 and the downstream end of the flight portion 7. Thus, the clearance increases gradually all over the range between the downstream end of the flight portion 7 and the downstream end 11a of the supply port 11. That is, the clearance D2 at the downstream end 11a of the supply port 11 is larger than the clearance D1 at the downstream end of the flight portion 7.

Using the coordinates in FIG. 4, FIG. 7 shows a relationship between the clearance in the axial direction of each screw and the viscosity coefficient in the screw shape according to the present embodiment. The clearance δ increases from the downstream end of the casing 4 (the origin O) toward the downstream end 11a of the supply port 11. Therefore, at the downstream end 11a of the supply port 11, the rotational speed at the tip of the flight portion 7 is smaller than that in the background-art screw shape. Thus, increase in strain rate is inhibited. As a result, at the downstream end 11a of the supply port 11, the viscosity coefficient µ of the material is kept higher than that in the background-art screw shape in which the clearance is constant. That is, the distribution of the viscosity coefficient µ shown by the broken line in FIG. 7 is shifted to the right (to increase the viscosity coefficient) as a whole relatively to the distribution of the viscosity coefficient µ shown by the broken line in FIG. 5. Thus, leakage of the material toward the supply port 11 is inhibited to improve the conveyance efficiency. It is therefore possible to improve the capacity of increasing the pressure in the bank portion 10.

In addition, as shown in FIG. 6, the clearance increases gradually all over the range between the downstream end of the flight portion 7 and the downstream end 11a of the supply port 11. Accordingly, the capacity of increasing the pressure in the bank portion 10 can be further improved in comparison with the case where the clearance is discontinuous. This is because leakage of rubber from the clearance can be inhibited due to increase in viscosity coefficient of the rubber in the clearance.

### (Effect)

As described above, in the screw extruder 1 according to the present embodiment, the clearance D2 at the downstream end 11a of the supply port 11 is larger than the clearance at any other part within the range between the downstream end 11a of the supply port 11 and the downstream end of the flight portion 7. Accordingly, at the downstream end 11a of the supply port 11, the rotational speed at the tip of the flight portion 7 decreases and the strain rate decreases in comparison with those in the configuration where the clearance is constant within the range between the downstream end 11a of the supply port 11 and the downstream end of the flight portion 7. As a result, at the downstream end 11a of the supply port 11, the viscosity of the material is kept higher than that in the configuration where the clearance is constant, such that leakage of the material toward the supply port 11 is inhibited to improve the conveyance efficiency. Thus, it is possible to improve the capacity of increasing the pressure in the bank portion 10.

In addition, the clearance increases gradually all over the range between the downstream end of the flight portion 7 and the downstream end 11a of the supply port 11. Thus, the capacity of increasing the pressure in the bank portion 10 can be further improved in comparison with the case where the clearance is discontinuous.

### [Second Embodiment]

Next, a screw extruder according to a second embodiment will be described with reference to the drawings. Descriptions about a configuration common to that in the first embodiment and an effect attained by the configuration will be omitted, but different points from the first embodiment will be mainly described. The same members as those in the first embodiment are followed by the same references in the first embodiment.

### (Configuration of Screw Extruder)

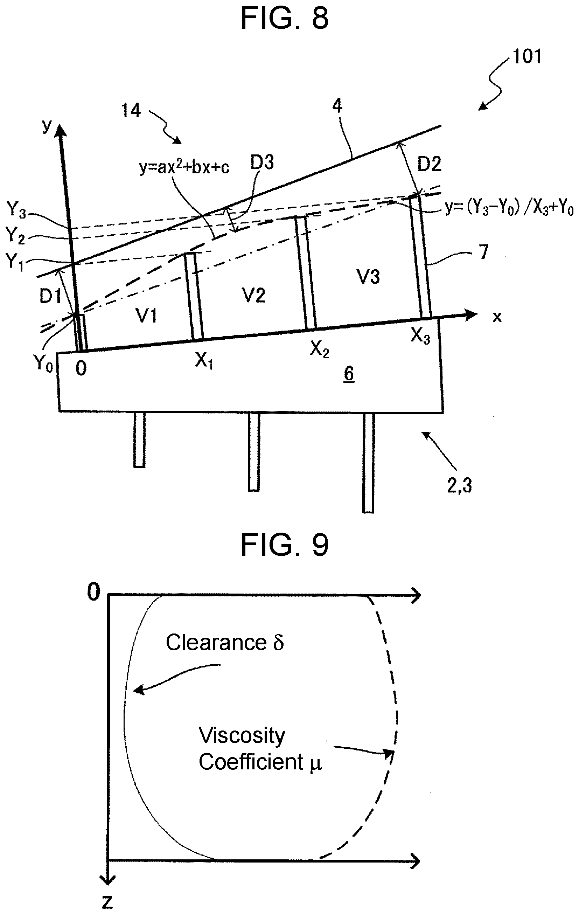

In a screw extruder 101 according to the present embodiment, as shown in FIG. 8, which is a sectional view of the casing downstream portion 14, the clearance D3 in the intermediate portion between the downstream end 11a of the supply port 11 and the downstream end of the flight portion 7 is smaller than the clearance D1 at the downstream end of the flight portion 7.

In the screw extruder 101 according to the present embodiment, in the sectional view in the radial direction of the shaft portion 6, an imaginary line (broken line) connecting top points of the flight portion 7 is a curved line and the inner wall surface (solid line) of the casing 4 is a straight line all over the range between the downstream end 11a of the supply port 11 and the downstream end of the flight portion 7. Thus, the clearance varies continuously all over the range between the downstream end 11a of the supply port 11 and the downstream end of the flight portion 7. In the present embodiment, the imaginary line connecting the top points of the flight portion 7 is a quadratic curve. However, the curved line is not limited thereto. In addition, the inner wall surface (solid line) of the casing 4 may be curved.

Using the coordinates in FIG. 4, FIG. 9 shows a relationship between the clearance in the axial direction of each screw and the viscosity coefficient in the screw shape according to the present embodiment. The clearance δ decreases from the downstream end of the casing 4 (the origin O) toward the intermediate portion and increases from the intermediate portion toward the downstream end 11a of the supply port 11. Therefore, the viscosity coefficient µ of the material increases from the downstream end of the casing 4 (the origin O) toward the intermediate portion and decreases from the intermediate portion toward the downstream end 11a of the supply port 11.

As shown in FIG. 8, in the case where the clearance D3 in the intermediate portion is smaller than the clearance D1 at the downstream end of the flight portion 7, the strain rate in the intermediate portion is smaller than that in the screw extruder 1 according to the first embodiment. As a result, in the intermediate portion, the viscosity coefficient of the material is kept higher than that in the screw extruder 1 according to the first embodiment, such that leakage of the material from the intermediate portion to the upstream side is inhibited to further improve the conveyance efficiency. Thus, it is possible to further improve the capacity of increasing the pressure in the bank portion 10.

In addition, in the screw extruder 1 according to the first embodiment, as shown in FIG. 6, it is necessary to reduce the height of the flight portion 7 at the downstream end 11a of the supply port 11 in order to increase the clearance D2 at the downstream end 11a of the supply port 11. Therefore, the volumes V1 to V3 in the respective pitches are reduced to lower the conveyance capacity in comparison with those in the case where the clearance is constant.

Therefore, in the present embodiment, as shown in FIG. 8, in the sectional view in the radial direction of the shaft portion 6, the imaginary line connecting the top points of the flight portion 7 is formed into a curved line all over the range between the downstream end 11a of the supply port 11 and the downstream end of the flight portion 7. Thus, the height of the flight portion 7 is kept high in the intermediate portion. As a result, the volumes V1 to V3 in the respective pitches are larger than those in the screw extruder 1 according to the first embodiment. That is, V1 in the present embodiment is larger than V1 in the first embodiment, V2 in the present embodiment is larger than V2 in the first embodiment, and V3 in the present embodiment is larger than V3 in the first embodiment. Thus, the conveyance capacity can be improved.

Here, in FIG. 8, the x-coordinate is taken along the surface of the shaft portion 6 of each screw 2, 3 and the y-coordinate is taken in a direction perpendicular to the surface of the shaft portion 6, with the center of the bottom side of the top portion at the downstream end in the flight portion 7 of the screw 2, 3 as the origin O. The x-coordinate of the top portion at the downstream end of the flight portion 7 is set as 0, the x-coordinate of the top portion on the upstream side from the top portion at the downstream end of the flight portion 7 by the amount corresponding to one rotation is set as X₁, the x-coordinate of the top portion on the upstream side from the top portion at the downstream end of the flight portion 7 by the amount corresponding to two rotations is set as X₂, and the x-coordinate of the top portion on the upstream side from the top portion at the downstream end of the flight portion 7 by the amount corresponding to three rotations is set as X₃. In addition, the height of the top portion at the downstream end of the flight portion 7 is set as Y₀, the height of the top portion on the upstream side from the top portion at the downstream end of the flight portion 7 by the amount corresponding to one rotation is set as Y₁, the height of the top portion on the upstream side from the top portion at the downstream end of the flight portion 7 by the amount corresponding to two rotations is set as Y₂, and the height of the top portion on the upstream side from the top portion at the downstream end of the flight portion 7 by the amount corresponding to three rotations is set as Y₃.

The straight line (alternate long and short dash line) connecting the top point of the top portion at the downstream end of the flight portion 7 and the top point of the top portion on the upstream side from the top portion at the downstream end of the flight portion 7 by the amount corresponding to three rotations can be expressed as y=(Y₃-Y₀)/X₃+Y₀. The quadratic curve (dotted line) connecting the top point of the top portion at the downstream end of the flight portion 7 and the top point of the top portion on the upstream side from the top portion at the downstream end of the flight portion 7 by the amount corresponding to three rotations can be expressed as y=ax²+bx+c. The slope at the downstream end of the flight portion 7 in the quadratic curve is b, and the slope in the top portion on the upstream side from the top portion at the downstream end of the flight portion 7 by the amount corresponding to three rotations is 2aX₃+b.

The slope of the quadratic curve is larger than the slope (Y₃-Y₀)/X₃ of the straight line at the downstream end of the flight portion 7, and smaller than the slope (Y₃-Y₀)/X₃ of the straight line in the top portion on the upstream side from the top portion at the downstream end of the flight portion 7 by the amount corresponding to three rotations. Accordingly, the relationship of b > (Y₃-Y₀)/X₃ > 2aX₃+b is established.

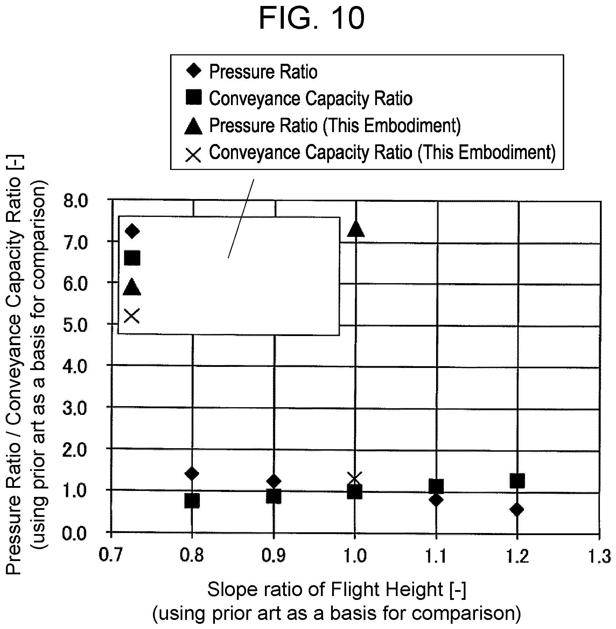

FIG. 10 shows a result of the capacity of increasing pressure simply calculated based on shape factors of screws. Here, the slope of flight height designates a slope of a straight line connecting top points of the flight portion 7 along the axial direction of each screw 2, 3. In the background-art screw shape, the slope ratio of the flight height is 1.0. The value of the slope ratio of the flight height is reduced as the clearance D2 at the downstream end 11a of the supply port 11 is larger than the clearance D1 at the downstream end of the flight portion 7.

In the background-art screw shape, a substantially proportional relationship is established between the slope of the flight height and the pressure ratio or the conveyance capacity ratio. A trade-off relationship is established between the pressure ratio and the conveyance capacity ratio. On the other hand, in the screw shape according to the present embodiment, the pressure ratio reaches about 7 times while the conveyance capacity is kept as large as in the background art. It is understood from the fact that the conveyance capacity can be improved as much as in the background art while the capacity of increasing the pressure in the bank portion 10 is improved.

### (Effect)

As described above, in the screw extruder 101 according to the present embodiment, the clearance D3 in the intermediate portion between the downstream end 11a of the supply port 11 and the downstream end of the flight portion 7 is smaller than the clearance D1 at the downstream end of the flight portion 7. Accordingly, the strain rate in the intermediate portion is smaller than that in the screw extruder 1 according to the first embodiment. As a result, in the intermediate portion, the viscosity coefficient of the material is kept higher than that in the screw extruder 1 according to the first embodiment, such that leakage of the material from the intermediate portion to the upstream side is inhibited to further improve the conveyance efficiency. Thus, it is possible to further improve the capacity of increasing the pressure in the bank portion.

In addition, the clearance varies continuously all over the range between the downstream end 11a of the supply port 11 and the downstream end of the flight portion 7. Thus, the capacity of increasing the pressure in the bank portion 10 can be further improved in comparison with the case where the clearance is discontinuous.

In addition, in the sectional view in the radial direction of the shaft portion 6, the imaginary line connecting the top points of the flight portion 7 is a curved line all over the range between the downstream end 11a of the supply port 11 and the downstream end of the flight portion 7. In the screw extruder 1 according to the first embodiment, the volumes V1 to V3 in the respective pitches of each screw are smaller than those in the case where the clearance is constant. Thus, the conveyance capacity is lowered. Therefore, in the sectional view in the radial direction of the shaft portion 6, the imaginary line connecting the top points of the flight portion 7 is formed into a curved line all over the range between the downstream end 11a of the supply port 11 and the downstream end of the flight portion 7. Accordingly, the height of the flight portion 7 in the intermediate portion is kept high. As a result, the volumes V1 to V3 in the respective pitches are larger than those in the screw extruder 1 according to the first embodiment. Thus, the conveyance capacity can be improved.

In addition, in the sectional view in the radial direction of the shaft portion 6, the inner wall surface of the casing 4 is a straight line all over the range between the downstream end 11a of the supply port 11 and the downstream end of the flight portion 7. Thus, the casing 4 can be produced easily.

### (Modification Example)

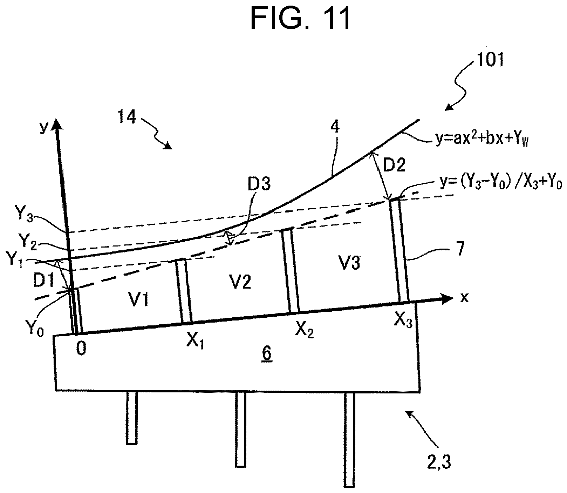

In the screw extruder 101 according to the present embodiment, as shown in FIG. 11, which is a sectional view of the casing downstream portion 14, in the sectional view in the radial direction of the shaft portion 6, the imaginary line (broken line) connecting the top points of the flight portion 7 may be a straight line and the inner wall surface (solid line) of the casing 4 may be a curved line, all over the range between the downstream end 11a of the supply port 11 and the downstream end of the flight portion 7. Even in such a configuration, the clearance varies continuously all over the range between the downstream end 11a of the supply port 11 and the downstream end of the flight portion 7. In the present modification example, the inner wall surface of the casing 4 is a quadratic curve. However, the curved line is not limited thereto. In addition, the imaginary line (broken line) connecting the top points of the flight portion 7 may be a curved line.

As shown in FIG. 8, in the case where the imaginary line (broken line) connecting the top points of the flight portion 7 is a curved line, depending on the interval between the shaft portions 6 of the screws 2 and 3 to be paired, the screws 2 and 3 may interfere with each other. However, as shown in FIG. 11, in the case where the inner wall surface (solid line) of the casing 4 is formed into a curved line, the interval between the shaft portions 6 can be made narrower than that in the case where the imaginary line connecting the top points of the flight portion 7 is formed into a curved line.

In FIG. 11, the x-coordinate is taken along the surface of the shaft portion 6 of each screw 2, 3 and the y-coordinate is taken in a direction perpendicular to the surface of the shaft portion 6 with the center of the bottom side of the top portion at the downstream end in the flight portion 7 of the screw 2, 3 as the origin O. The x-coordinate of the top portion at the downstream end of the flight portion 7 is set as 0, the x-coordinate of the top portion on the upstream side from the top portion at the downstream end of the flight portion 7 by the amount corresponding to one rotation is set as X₁, the x-coordinate of the top portion on the upstream side from the top portion at the downstream end of the flight portion 7 by the amount corresponding to two rotations is set as X₂, and the x-coordinate of the top portion on the upstream side from the top portion at the downstream end of the flight portion 7 by the amount corresponding to three rotations is set as X₃. In addition, the height of the top portion at the downstream end of the flight portion 7 is set as Y₀, the height of the top portion on the upstream side from the top portion at the downstream end of the flight portion 7 by the amount corresponding to one rotation is set as Y₁, the height of the top portion on the upstream side from the top portion at the downstream end of the flight portion 7 by the amount corresponding to two rotations is set as Y₂, and the height of the top portion on the upstream side from the top portion at the downstream end of the flight portion 7 by the amount corresponding to three rotations is set as Y₃.

The straight line (dotted line) connecting the top point of the top portion at the downstream end of the flight portion 7 and the top point of the top portion on the upstream side from the top portion at the downstream end of the flight portion 7 by the amount corresponding to three rotations can be expressed as y=(Y₃-Y₀)/X₃+Y₀. The quadratic curve of the inner wall surface of the casing can be expressed as y=ax²+bx+Y_{w}. Here, Y_{w} designates an intersection between the quadratic curve and the y-axis. The slope at the downstream end of the flight portion 7 in the quadratic curve is b, and the slope in the top portion on the upstream side from the top portion at the downstream end of the flight portion 7 by the amount corresponding to three rotations is 2aX₃+b.

The slope of the quadratic curve is smaller than the slope (Y₃-Y₀)/X₃ of the straight line at the downstream end of the flight portion 7, and larger than the slope (Y₃-Y₀)/X₃ of the straight line in the top portion on the upstream side from the top portion at the downstream end of the flight portion 7 by the amount corresponding to three rotations. Accordingly, the relationship of b < (Y₃-Y₀)/X₃ < 2aX₃+b is established.

### (Effect)

As described above, according to the present modification, in the sectional view in the radial direction of the shaft portion 6, the inner wall surface of the casing 4 is a curved line all over the range between the downstream end 11a of the supply port 11 and the downstream end of the flight portion 7. When the imaginary line (broken line) connecting the top points of the flight portion 7 is a straight line, some interval between the shaft portions 6 of the screws 2 and 3 to be paired may cause the screws 2 and 3 to interfere with each other. However, when the inner wall surface (solid line) of the casing 4 is formed into a curved line, the interval between the shaft portions 6 can be made narrower than in the case where the imaginary line connecting the top points of the flight portion 7 is formed into a curved line.

In addition, in the sectional view in the radial direction of the shaft portion 6, the imaginary line connecting the top points of the flight portion 7 is a straight line all over the range between the downstream end 11a of the supply port 11 and the downstream end of the flight portion 7. Thus, the screws 2 and 3 can be produced easily.

### [Third Embodiment]

Next, a screw extruder according to a third embodiment will be described with reference to the drawings. Description about a configuration common to that in the first embodiment and an effect attained by the configuration will be omitted, but different points from the first embodiment will be mainly described. The same members as those in the first embodiment are followed by the same references in the first embodiment.

### (Configuration of Screw Extruder)

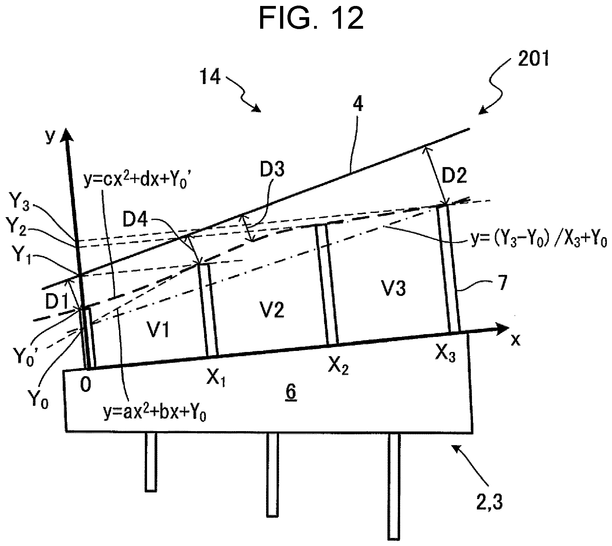

In a screw extruder 201 according to the present embodiment, as shown in FIG. 12, which is a sectional view of the casing downstream portion 14, the clearance D1 at the downstream end of the flight portion 7 is smaller than a clearance D4 in the top portion on the upstream side from the top portion at the downstream end in the flight portion 7 by the amount corresponding to one rotation. The clearance D1 may be equal to the clearance D4. The clearance D1 is larger than the clearance D3.

In the screw extruder 101 according to the present embodiment, in the sectional view in the radial direction of the shaft portion 6, the inner wall surface (solid line) of the casing 4 is a straight line. In addition, an imaginary line (broken line) connecting top points of the flight portion 7 within a range starting in the top portion on the upstream side from the top portion at the downstream end in the flight portion 7 by the amount corresponding to one rotation, passing through the top portions thereof and reaching the downstream end 11a of the supply port 11 is a curved line. Further, an imaginary line (broken line) connecting top points of the flight portion 7 within a range between the aforementioned top portion on the upstream side by the amount corresponding to one rotation and the top portion at the downstream end is another curved line. Thus, the clearance varies continuously all over the range between the downstream end 11a of the supply port 11 and the downstream end of the flight portion 7. In the present embodiment, the two imaginary lines are quadratic curves respectively. However, the curved lines are not limited to quadratic curves. In addition, the inner wall surface (solid line) of the casing 4 may be a curved line.

In the case where the clearance D1 at the downstream end of the flight portion 7 is smaller than the clearance D4 in the top portion on the upstream side from the top portion at the downstream end in the flight portion 7 by the amount corresponding to one rotation, the strain rate at the downstream end of the flight portion 7 is smaller than that in the screw extruder 101 according to the second embodiment. As a result, at the downstream end of the flight portion 7, the viscosity of the material is kept higher than that in the screw extruder 101 according to the second embodiment. Accordingly, leakage of the material from the bank portion 10 is inhibited to further improve the conveyance efficiency. Thus, it is possible to further improve the capacity of increasing the pressure in the bank portion 10.

In addition, as shown in FIG. 8, in the screw extruder 101 according to the second embodiment, the height of the top portion at the downstream end of the flight portion 7 is reduced so that the volume V1 on the downstream side of the flight portion 7 tends to be reduced. In view of the above, in the present embodiment, as shown in FIG. 12, in the sectional view in the radial direction of the shaft portion 6, the imaginary line connecting the top points of the flight portion 7 is formed into a curved line all over the range between the top portion on the upstream side by the amount of one rotation and the top portion at the downstream end. Thus, the height of the top portion at the downstream end of the flight portion 7 can be increased in comparison with that in the screw extruder 101 according to the second embodiment, so that the conveyance amount (volume V1) on the downstream side of the flight portion 7 can be increased.

In addition, the production capacity of the screw extruder 201 mostly depends on the rotational speed of the rollers 8 and 9 (see FIG. 1). Therefore, when the extruder is actually operated, the rotational speed of the rollers 8 and 9 is specified, and the rotational speeds of the screws 2 and 3 are controlled to keep constant the pressure in the bank portion 10. Accordingly, if the conveyance capacity of each screw 2, 3 depending on the height of the flight portion 7 is low, the rotational speed of the screw 2, 3 has to be increased. Therefore, in the case where the volume (conveyance amount) V1 on the downstream side of the flight portion 7 is increased, the rotational speed of the screw 2, 3 can be prevented from increasing.

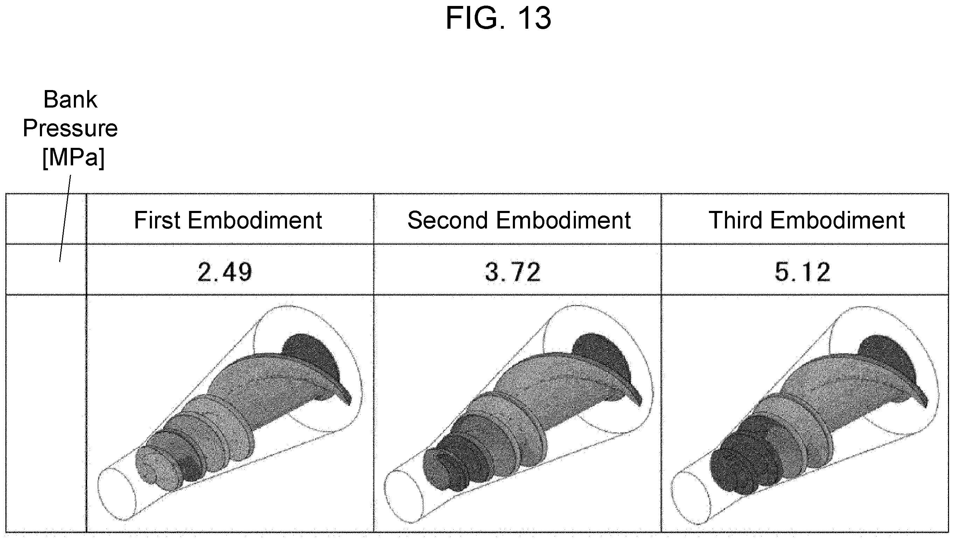

FIG. 13 shows analysis results about capacity of increasing pressure in the first to third embodiments. It is understood from FIG. 13 that the screw extruder 101 according to the second embodiment is higher in capacity of increasing pressure than the screw extruder 1 according to the first embodiment, and the screw extruder 201 according to the third embodiment is the highest in capacity of increasing pressure. This is because the conveyance capacity in the screw extruder 201 according to the third embodiment is improved in comparison with that in the screw extruder 101 according to the second embodiment, and the clearance D1 at the downstream end of the flight portion 7 is smaller in the screw extruder 201 according to the third embodiment than in the screw extruder 101 according to the second embodiment. Thus, the strain rate at the downstream end of the flight portion 7 can be reduced to inhibit the viscosity coefficient of the material from lowering. As a result, leakage of the material from the bank portion 10 can be inhibited to improve the capacity of increasing pressure.

In FIG. 12, the x-coordinate is taken along the surface of the shaft portion 6 of each screw 2, 3 and the y-coordinate is taken in a direction perpendicular to the surface of the shaft portion 6 with the center of the bottom side of the top portion at the downstream end in the flight portion 7 of the screw 2, 3 as the origin O. The x-coordinate of the top portion at the downstream end of the flight portion 7 is set as 0, the x-coordinate of the top portion on the upstream side from the top portion at the downstream end of the flight portion 7 by the amount corresponding to one rotation is set as X₁, the x-coordinate of the top portion on the upstream side from the top portion at the downstream end of the flight portion 7 by the amount corresponding to two rotations is set as X₂, and the x-coordinate of the top portion on the upstream side from the top portion at the downstream end of the flight portion 7 by the amount corresponding to three rotations is set as X₃. In addition, the height of the top portion at the downstream end of the flight portion 7 is set as Y₀', the height of the top portion on the upstream side from the top portion at the downstream end of the flight portion 7 by the amount corresponding to one rotation is set as Y₁, the height of the top portion on the upstream side from the top portion at the downstream end of the flight portion 7 by the amount corresponding to two rotations is set as Y₂, and the height of the top portion on the upstream side from the top portion at the downstream end of the flight portion 7 by the amount corresponding to three rotations is set as Y₃. In addition, the intersection between the y-axis and the same quadratic curve as in FIG. 8 is regarded as Y₀.

The straight line (alternate long and short dash line) connecting the intersection Y₀ and the top point of the top portion on the upstream side from the top portion at the downstream end of the flight portion 7 by the amount corresponding to three rotations can be expressed as y=(Y₃-Y₀)/X₃+Y₀. The quadratic curve (dotted line) connecting the intersection Y₀ and the top point of the top portion on the upstream side from the top portion at the downstream end of the flight portion 7 by the amount corresponding to three rotations can be expressed as y=ax²+bx+Y₀. The slope at the downstream end of the flight portion 7 in the quadratic curve is b, and the slope in the top portion on the upstream side from the top portion at the downstream end of the flight portion 7 by the amount corresponding to three rotations is 2aX₃+b.

The slope of the quadratic curve is larger than the slope (Y₃-Y₀)/X₃ of the straight line at the downstream end of the flight portion 7, and smaller than the slope (Y₃-Y₀)/X₃ of the straight line in the top portion on the upstream side from the top portion at the downstream end of the flight portion 7 by the amount corresponding to three rotations. Accordingly, the relationship of b > (Y₃-Y₀)/X₃ > 2aX₃+b is established.

In addition, the straight line (dotted line) connecting the top point of the top portion at the downstream end of the flight portion 7 and the top point of the top portion on the upstream side from the top portion at the downstream end of the flight portion 7 by the amount corresponding to one rotation can be expressed as y=cx²+dx+Y₀'. The slope at the downstream end of the flight portion 7 in the quadratic curve is d, and the slope in the top portion on the upstream side from the top portion at the downstream end of the flight portion 7 by the amount corresponding to one rotation is 2cX₁+d.

The slope of the quadratic curve is smaller than the slope (Y₃-Y₀)/X₃ of the straight line at the downstream end of the flight portion 7, and equal to the slope 2aX₁+b of the quadratic curve in the top portion on the upstream side from the top portion at the downstream end of the flight portion 7 by the amount corresponding to one rotation. Accordingly, the relationship of d < (Y₃-Y₀)/X₃, and the relationship of 2aX₁+b = 2cX₁+d are established.

### (Effect)

As described above, in the screw extruder 201 according to the present embodiment, the clearance D1 at the downstream end of the flight portion 7 is equal to or smaller than the clearance D4 in the top portion on the upstream side from the top portion at the downstream end of the flight portion 7 by the amount corresponding to one rotation. Accordingly, the strain rate at the downstream end of the flight portion 7 is smaller than that in the screw extruder 101 according to the second embodiment. As a result, at the downstream end of the flight portion 7, the viscosity of the material is kept higher than that in the screw extruder 101 according to the second embodiment, such that leakage of the material from the bank portion 10 is inhibited to further improve the conveyance efficiency. Thus, it is possible to further improve the capacity of increasing the pressure in the bank portion 10.

In addition, the clearance varies continuously all over the range between the top portion on the upstream side by the amount corresponding to one rotation and the top portion at the downstream end. Thus, the capacity of increasing the pressure in the bank portion 10 can be further improved in comparison with the case where the clearance is discontinuous.

In addition, in the sectional view in the radial direction of the shaft portion 6, the imaginary line connecting the top points of the flight portion 7 is a curved line all over the range between the top portion on the upstream side by the amount corresponding to one rotation and the top portion at the downstream end. In the screw extruder 101 according to the second embodiment, the height of the top portion at the downstream end of the flight portion 7 is reduced so that the volume V1 on the downstream side of the flight portion 7 tends to be reduced. In view of the above, in the sectional view in the radial direction of the shaft portion 6, the imaginary line connecting the top points of the flight portion 7 is formed into a curved line all over the range between the top portion on the upstream side by the amount corresponding to one rotation and the top portion at the downstream end. Thus, the height of the top portion at the downstream end of the flight portion 7 can be increased in comparison with that in the screw extruder 101 according to the second embodiment, so that the conveyance amount (volume V1) on the downstream side of the flight portion 7 can be increased.

In addition, in the sectional view in the radial direction of the shaft portion 6, the inner wall surface of the casing 4 is a straight line all over the range between the top portion on the upstream side by the amount corresponding to one rotation and the top portion at the downstream end. Thus, the casing 4 can be produced easily.

### (Modification Example)

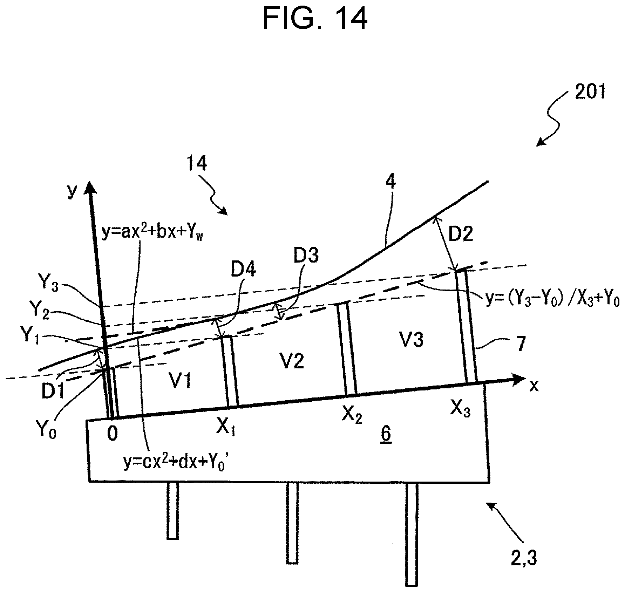

In the screw extruder 201 according to the present embodiment, as shown in FIG. 14, which is a sectional view of the casing downstream portion 14, in the sectional view in the radial direction of the shaft portion 6, the imaginary line (broken line) connecting the top points of the flight portion 7 is a straight line all over the range between the downstream end 11a of the supply port 11 and the downstream end of the flight portion 7. On the other hand, the inner wall surface (solid line) of the casing 4 is a curved line all over the range between the top portion on the upstream side from the top portion at the downstream end of the flight portion 7 by the amount corresponding to one rotation and the downstream end 11a of the supply port 11. In this configuration, the inner wall surface (solid line) of the casing 4 may be formed into another curved line all over the range between the top portion on the upstream side in the flight portion 7 by the amount corresponding to one rotation and the top portion at the downstream end. Even in such a configuration, the clearance varies continuously all over the range between the downstream end 11a of the supply port 11 and the downstream end of the flight portion 7. In this modification example, the two imaginary lines are quadratic curves respectively, but the curved lines are not limited to quadratic curves. In addition, the imaginary line (broken line) connecting the top points of the flight portion 7 may be a curved line.

Even in such a configuration, leakage of the material from the bank portion 10 is inhibited to further improve the conveyance efficiency. Thus, it is possible to further improve the capacity of increasing the pressure in the bank portion 10.

In FIG. 14, the x-coordinate is taken along the surface of the shaft portion 6 of each screw 2, 3 and the y-coordinate is taken in a direction perpendicular to the surface of the shaft portion 6 with the center of the bottom side of the top portion at the downstream end in the flight portion 7 of the screw 2, 3 as the origin O. The x-coordinate of the top portion at the downstream end of the flight portion 7 is set as 0, the x-coordinate of the top portion on the upstream side from the top portion at the downstream end of the flight portion 7 by the amount corresponding to one rotation is set as X₁, the x-coordinate of the top portion on the upstream side from the top portion at the downstream end of the flight portion 7 by the amount corresponding to two rotations is set as X₂, and the x-coordinate of the top portion on the upstream side from the top portion at the downstream end of the flight portion 7 by the amount corresponding to three rotations is set as X₃. In addition, the height of the top portion at the downstream end of the flight portion 7 is set as Y₀, the height of the top portion on the upstream side from the top portion at the downstream end of the flight portion 7 by the amount corresponding to one rotation is set as Y₁, the height of the top portion on the upstream side from the top portion at the downstream end of the flight portion 7 by the amount corresponding to two rotations is set as Y₂, and the height of the top portion on the upstream side from the top portion at the downstream end of the flight portion 7 by the amount corresponding to three rotations is set as Y₃.

The straight line (dotted line) connecting the top point of the top portion at the downstream end of the flight portion 7 and the top point of the top portion on the upstream side from the top portion at the downstream end of the flight portion 7 by the amount corresponding to three rotations can be expressed as y=(Y₃-Y₀)/X₃+Y₀. In addition, the quadratic curve of the inner wall surface of the casing similar to that in FIG. 11 can be expressed as y=ax²+bx+Y_{w}. Here, Yw designates an intersection between the quadratic curve and the y-axis. The slope at the downstream end of the flight portion 7 in the quadratic curve is b, and the slope in the top portion on the upstream side from the top portion at the downstream end of the flight portion 7 by the amount corresponding to three rotations is 2aX₃+b.

The slope of the quadratic curve is smaller than the slope (Y₃-Y₀)/X₃ of the straight line at the downstream end of the flight portion 7, and larger than the slope (Y₃-Y₀)/X₃ of the straight line in the top portion on the upstream side from the top portion at the downstream end of the flight portion 7 by the amount corresponding to three rotations. Accordingly, the relationship of b < (Y₃-Y₀)/X₃ < 2aX₃+b is established.

In addition, the quadratic curve (solid line) of the inner wall surface of the casing between the top portion at the downstream end of the flight portion 7 and the top portion on the upstream side from the top portion at the downstream end of the flight portion 7 by the amount corresponding to one rotation can be expressed as y=cx²+dx+Y₀'. Here, Y₀' designates an intersection between the quadratic curve and the y-axis. The slope at the downstream end of the flight portion 7 in the quadratic curve is d, and the slope in the top portion on the upstream side from the top portion at the downstream end of the flight portion 7 by the amount corresponding to one rotation is 2cX₁+d.

The slope of the quadratic curve is larger than the slope (Y₃-Y₀)/X₃ of the straight line at the downstream end of the flight portion 7, and equal to the slope 2aX₁+b of the quadratic curve in the top portion on the upstream side from the top portion at the downstream end of the flight portion 7 by the amount corresponding to one rotation. Accordingly, the relationship of d > (Y₃-Y₀)/X₃, and the relationship of 2aX₁+b = 2cX₁+d are established.

### (Effect)

As described above, according to the present modification example, in the sectional view in the radial direction of the shaft portion 6, the imaginary line connecting the top points of the flight portion 7 is a straight line all over the range between the top portion on the upstream side by the amount corresponding to one rotation and the top portion at the downstream end. Thus, the screws 2 and 3 can be produced easily.

The above description of the embodiments of the present disclosure are not to limit the present disclosure particularly, but they are merely exemplars. Specific configurations and so on can be designed and changed suitably. In addition, the operations and effects described in the embodiments of the disclosure are merely listed as most suitable operations and effects that can be obtained from the present disclosure. The operations and effects of the present disclosure are not limited to the operations and effects described in the embodiments of the present disclosure.

The present application is based on Japanese Patent Application No. 2018-119855 filed on June 25, 2018, the content of which is incorporated herein by reference.

### REFERENCE SIGNS LIST

- 1,101,201: screw extruder
- 2,3: screw
- 4: casing
- 6: shaft portion
- 7: flight portion
- 8,9: roller
- 10: bank portion
- 11: supply port
- 11a: downstream end
- 13: casing upstream portion
- 14: casing downstream portion
- 50: sheet

## Claims

1. A screw extruder for extruding a kneaded material, the screw extruder comprising:
a pair of screws;
a casing that houses the pair of screws and includes a supply port for supplying a material, the supply port being provided on an upstream side of the casing; and
a roller-die configured to extrude and form the material into a sheet shape, the roller-die being provided on a downstream side of the casing, wherein:
each of the screws includes a shaft portion, and a spiral flight portion provided in an outer peripheral surface of the shaft portion;
the flight portion is formed into a shape in which a radial distance between the surface of the shaft portion and a tip of the flight portion decreases gradually toward a downstream end in an extrusion direction of a kneaded material;
the casing has a tapered shape; and
within a range between a downstream end of the supply port and a downstream end of the flight portion, a clearance between a top portion of the flight portion and an inner wall surface of the casing at the downstream end of the supply port is larger than a clearance at any other part.

2. The screw extruder according to claim 1, wherein the clearance increases gradually from the downstream end of the flight portion to the downstream end of the supply port.

3. The screw extruder according to claim 1, wherein the clearance in an intermediate portion between the downstream end of the supply port and the downstream end of the flight portion is smaller than the clearance at the downstream end of the flight portion.

4. The screw extruder according to claim 3, wherein the clearance varies continuously from the downstream end of the supply port to the downstream end of the flight portion.

5. The screw extruder according to claim 4, wherein in a sectional view in a radial direction of the shaft portion, an imaginary line connecting top points of the flight portion is a curved line between the downstream end of the supply port and the downstream end of the flight portion.

6. The screw extruder according to claim 5, wherein in a sectional view in a radial direction of the shaft portion, an inner wall surface of the casing is a straight line between the downstream end of the supply port and the downstream end of the flight portion.

7. The screw extruder according to claim 4, wherein in a sectional view in a radial direction of the shaft portion, an inner wall surface of the casing is a curved line between the downstream end of the supply port and the downstream end of the flight portion.

8. The screw extruder according to claim 7, wherein in a sectional view in a radial direction of the shaft portion, an imaginary line connecting top points of the flight portion is a straight line between the downstream end of the supply port and the downstream end of the flight portion.

9. The screw extruder according to any one of claims 3 to 6, wherein the clearance at the downstream end of the flight portion is equal to or smaller than the clearance in the top portion on an upstream side from the top portion at the downstream end in the flight portion by an amount corresponding to one rotation.

10. The screw extruder according to claim 9, wherein the clearance varies continuously from the top portion on the upstream side by the amount corresponding to one rotation to the top portion at the downstream end.

11. The screw extruder according to claim 10, wherein in a sectional view in a radial direction of the shaft portion, an imaginary line connecting top points of the flight portion is a curved line between the top portion on the upstream side by the amount corresponding to one rotation and the top portion at the downstream end.

12. The screw extruder according to claim 11, wherein in a sectional view in a radial direction of the shaft portion, an inner wall surface of the casing is a straight line between the top portion on the upstream side by the amount corresponding to one rotation and the top portion at the downstream end.

13. The screw extruder according to any one of claims 3, 4, 7 and 8, wherein the clearance at the downstream end of the flight portion is equal to or smaller than the clearance in the top portion on an upstream side from the top portion at the downstream end in the flight portion by an amount corresponding to one rotation.

14. The screw extruder according to claim 13, wherein the clearance varies continuously from the top portion on the upstream side by the amount corresponding to one rotation to the top portion at the downstream end.

15. The screw extruder according to claim 14, wherein in a sectional view in a radial direction of the shaft portion, an inner wall surface of the casing is a curved line between the top portion on the upstream side by the amount corresponding to one rotation and the top portion at the downstream end.

16. The screw extruder according to claim 15, wherein in a sectional view in a radial direction of the shaft portion, an imaginary line connecting top points of the flight portion is a straight line between the top portion on the upstream side by the amount corresponding to one rotation and the top portion at the downstream end.
